# EUROPEAN PATENT SPECIFICATION

(11) **EP 2 773 577 B1**
(45) Date of publication and mention of the grant of the patent: **02.11.2016**
(21) Application number: 12783369.7
(22) Date of filing: 02.11.2012
(51) Int. Cl.: B65D 85/804, A47J 31/06, A23L 2/385

(54) **FORM-RETAINING PAD FOR PREPARING A BEVERAGE, ASSEMBLY OF A BEVERAGE PREPARATION MACHINE COMPRISING A PAD HOLDER AND SUCH A FORM-RETAINING PAD AND RELATED METHODS**
FORMSTABILES PAD ZUR ZUBEREITUNG EINES GETRÄNKS ZUM KONSUMIEREN, ANORDNUNG EINES GETRÄNKEZUBEREITUNGSAUTOMATEN MIT EINEM PADHALTER UND EINEM SOLCHEN FORMSTABILEN PAD UND ZUGEHÖRIGE VERFAHREN
TAMPON À MAINTIEN DE FORME POUR PRÉPARER UNE BOISSON APTE À LA CONSOMMATION, ENSEMBLE D'UNE MACHINE DE PRÉPARATION DE BOISSON COMPRENANT UN SUPPORT DE TAMPON ET UN TEL TAMPON DE MAINTIEN DE FORME ET PROCÉDÉS ASSOCIÉS

(30) Priority: 04.11.2011 NL 2007724
(43) Date of publication of application: 10.09.2014
(73) Proprietor: Koninklijke Douwe Egberts B.V., 3532 AD Utrecht (NL)
(72) Inventor: GLASER, Johannes Damianus, NL-4823 JC Breda (NL); DE GRAAFF, Gerbrand Kristiaan, NL-2182 DN Hillegom (NL); KNAPEN, Franciscus Johannes, NL-5296 NS Esch (NL); VEREIJKEN, Johannes Martinus Petrus Leonardus, NL-5712 NT Someren-Eind (NL)
(74) Representative: V.O.
(86) International application number: PCT/NL2012/050765
(87) International publication number: WO 2013/066178

(56) References cited:
- EP-A2- 1 398 279
- WO-A2-2009/063370
- US-A1- 2011 027 425

## Description

The invention relates to a form-retaining pad for preparing a beverage suitable for consumption, provided with:
- at least a first covering, in which a substance which is soluble in a liquid is included, wherein said at least first covering comprises a top sheet, manufactured from a material non-transmissive to the soluble substance, and a bottom sheet, manufactured from a material non-transmissive to the soluble substance, but transmissive to the substance dissolved in a liquid, wherein the top sheet and the bottom sheet extend at least partly substantially parallel to each other and to a surface,
- a stiffening body, which is placed between the top sheet and the bottom sheet, wherein the stiffening body has a top side adjacent to the top sheet and a bottom side adjacent to the bottom sheet, said top side having an open top side area, said bottom side having an open bottom area, said stiffening body further comprising an annular circumferential wall extending between the top side and the bottom side and a compartmenting wall configuration therein, which compartmenting wall configuration has a grid structure which is transmissive to liquid from the top side to the bottom side, in which grid structure at least a part of the soluble substance is accommodated and each compartment formed by the wall configuration is surrounded by that wall configuration, the top sheet and the bottom sheet, said annular circumferential wall having a curved cross-section and a bottom wall part extending at least substantially parallel to the surface, said bottom wall part having a circular edge defining the open bottom area.

Such a form-retaining pad is e.g. known from EP-A2-1,398,279. In this known form-retaining pad the bottom sheet is sealed to an outer surface of the annular circumferential wall. The known pad is intended for use in a beverage preparation machine known per se, such as a coffee maker, for preparing the beverage suitable for consumption. Here, the pad is placed in a pad holder of the machine, after which hot water is supplied to the holder by means of the machine. Then, the hot water flows through a top filter sheet to an inner space of the covering in which the water-soluble substance is present. This substance dissolves in the water and then leaves the pad through a bottom filter sheet. The holder is provided with, for instance, at least one outlet opening through which the water with the substance dissolved therein can flow out of the holder. A disadvantage of the known pad is that, in use, it can occur that hot water with the substance dissolved therein and leaving the bottom sheet also flows back between the annular circumferential wall of the form-retaining pad and the inner wall of the pad holder and does not leave the pad holder via the outlet opening. In addition, when the hot water is supplied under pressure to the pad holder, it appears that in some cases pressure leakages occur when the known form-retaining pad is placed in a pad holder. Such pressure leakages result in a less favorable flow of liquid through the form-retaining pad as a result of which the known form-retaining pad is not suitable to prepare beverages with good quality based on some specific substances.

It is an object of the invention to provide a form-retaining pad in which the amount of hot water with the substance dissolved therein flowing back between the annular circumferential wall of and the inner wall of the pad holder is at least reduced. It is a further object of the invention to provide a form-retaining pad with which it is possible to prepare beverages of good quality based on a large variety of substances.

For this purpose a form-retaining pad for preparing a beverage suitable for consumption as defined above, is in accordance with the invention characterized in that said bottom sheet is sealed to the outer surface of the bottom wall part of the annular circumferential wall, and said bottom sheet and the outer surface of the bottom wall part of the annular circumferential wall to which it is sealed form a smooth, flat surface. The invention is based on the insight that the outer surface of the bottom wall part of the annular circumferential wall of the known form-retaining pad is provided with a protruding elevation. This elevation is the result of the manner in which the known form-retaining pad is manufactured. In this manufacture a pre-form stiffening body is used of which the outer surface of the bottom wall part of the annular circumferential wall has a protruding rib, which provides the sealing material for sealing the body to the bottom sheet. During manufacturing the known-form retaining pad the bottom sheets however is sealed to an outer surface of the annular circumferential wall at a position which is spaced from the protruding rib. The bottom sheet therefore rests free on this protruding elevation, which in use can result therein that hot water (mostly under pressure) with the substance dissolved therein can flow back between the annular circumferential wall of the form-retaining pad and the inner wall of the pad holder. As a result of the measures according to the invention, that is, that the bottom sheet is sealed to the outer surface of the bottom wall part of the annular circumferential wall, and the bottom sheet and the outer surface of the bottom wall part of the annular circumferential wall to which it is sealed form a smooth, flat surface, the form-retaining pad can be placed in a pad holder of a beverage preparation machine such that they on the one hand closely abut each other such that when the form-retaining pad is received by the pad holder there is no gap between form-retaining pad and the smooth receiving wall of the pad holder, and on the other hand the bottom sheet can not lift from the bottom wall part. In this way the amount of hot water with the substance dissolved therein which can flow back between the annular circumferential wall of the form-retaining pad and the inner wall of the pad holder is at least strongly reduced. Preferably the outer surface of the bottom wall part of the annular circumferential wall to which it is sealed forms a smooth, flat surface. Within the context of the present invention "the outer surface of the bottom wall part" is to be understood as meaning the complete outer surface of the bottom wall part and a "flat" surface is a surface without elevation, relief or prominences.

In particular when the bottom sheet is sealed to the outer side of the bottom wall part of the annular circumferential wall by means of a circular seal it is possible to prevent any hot water with the substance dissolved therein from flowing back.

Preferably, the bottom sheet is fixed to a bottom side of the wall configuration. Here, it is even possible for the bottom sheet to be connected to the edges of the compartments located near the openings so that the compartments are closed at the bottom side by the bottom sheet. When the substance is powdery, this means that the substance cannot, for instance, move from one compartment to another compartment.

In an advantageous embodiment of a form-retaining pad according to the invention the bottom sheet and the top sheet are interconnected and are preferably interconnected at their longitudinal edges and are more preferably directly interconnected, wherein the interconnected parts form a joint. In this way the first covering can surround the stiffening body closely so that upon placement in a pad holder of a beverage preparation machine there is a close fit between form-retaining pad and pad holder resulting in a correct preparation of a beverage. More preferably, the top sheet is also connected to the top side of the stiffening body.

In case the stiffening body is manufactured from polypropylene it appears that providing a seal by applying heat to realize a bond between stiffening body and bottom sheet can be performed very reproducible and such that the bottom sheet and the outer surface of the bottom wall part of the annular circumferential wall to which it is sealed can form a flat surface in an easy and efficient manner.

In a further preferred embodiment of a form-retaining pad according to the invention a central part of bottom side of the stiffening body is provided with a bulging part extending beyond the outer surface of the bottom wall part of the annular circumferential wall. Preferably the bulging part has a surface extending parallel to the above-mentioned surface such that the form-retaining pad can be placed in a double pad holder in a positive mechanical engaging manner. In particular the surface forms a central part of the compartmenting wall configuration.

In an embodiment of a form-retaining pad according to the invention the soluble substance comprises one or more from the group consisting of instant coffee, instant tea, a chocolate ingredient, instant milk powder/creamer, chicory, spices, optionally in combination with roast and ground coffee, tea, sugar or flavors. A form-retaining pad according to the invention is in particular advantageous when the soluble substance is a combination of instant coffee, instant milk powder/creamer and a chocolate ingredient. Since when used in preparing a beverage the form-retaining pad in accordance with the invention provides an improved flow of water without any pressure leakages now combinations of substances can be used in order to prepare a beverage with good quality which have not been used before. In particular a substance as chicory or a spice can now be used for the first time as substance in a form-retaining pad. For example, chai tea comprising a combination of tea, chicory, and spices, can be used in the form-retaining pad according to the invention.

Generally, the top sheet of the form-retaining pad will be formed by a layer of filter material, such as filter paper. However, it is also possible for the form-retaining pad to be designed with a top sheet consisting of a layer of material non-transmissive to liquid, which is provided in a withdrawable manner. The top sheet may be provided with a plurality of apertures for receiving pressurized water. In an embodiment, the top sheet is closed except for these apertures. This may be achieved for example by manufacturing the top sheet by providing apertures in an otherwise impermeable substrate. Then, the apertures cause the permeability of the top sheet. It is not excluded however that the top sheet is permeable outside the apertures as well. This can be the case when the top sheet is made from a material that has some permeability by itself. Then, the permeability of the top sheet is not exclusively caused by the apertures. Preferably, however, the permeability of the top sheet is for the largest part caused by the apertures. In general, the top sheet outside the apertures may include a paper layer covered with a polypropylene layer. In between the paper layer and the polypropylene layer, a polyester layer may be provided. Preferably, the polypropylene layer forms an outer surface of the top sheet. The outer surface of the top sheet may form an outer surface of the pad. By using such materials for the top sheet, closure of the top sheet outside the apertures may be achieved. The bottom sheet may, in general, be similar to and/or include a similar material as the first permeable layer. This may facilitate a manufacturing process of the pad. However, alternatively, the bottom sheet may be different from and/or include a different material than the first permeable layer. The apertures preferably have a size dimensioned for establishing swirling motion of the water inside the filling. When the stiffening body is suitably designed, it can be suitable for reuse in this design. This is because the open top side offers the possibility to sprinkle a soluble substance in the grid structure formed by the compartmenting wall configuration.

The present invention also relates to an assembly of a beverage preparation machine comprising a pad holder and a form-retaining pad for preparing a beverage suitable for consumption, provided with:
- at least a first covering, in which a substance which is soluble in a liquid is included, wherein said at least first covering comprises a top sheet, manufactured from a material non-transmissive to the soluble substance, and a bottom sheet, manufactured from a material non-transmissive to the soluble substance, but transmissive to the substance dissolved in a liquid, wherein the top sheet and the bottom sheet extend at least partly substantially parallel to each other and to a surface,
- a stiffening body, which is placed between the top sheet and the bottom sheet, wherein the stiffening body has a top side adjacent to the top sheet and a bottom side adjacent to the bottom sheet, said top side having an open top side area, said bottom side having an open bottom area, said stiffening body further comprising an annular circumferential wall extending between the top side and the bottom side and a compartmenting wall configuration therein, which compartmenting wall configuration has a grid structure which is transmissive to liquid from the top side to the bottom side, in which grid structure at least a part of the soluble substance is accommodated and each compartment formed by the wall configuration is surrounded by that wall configuration, the top sheet and the bottom sheet, said annular circumferential wall having a curved cross-section and a bottom wall part extending at least substantially parallel to the surface, said bottom wall part having a circular edge defining the open bottom area, characterized in that, said bottom sheet is sealed to the outer surface of the bottom wall part of the annular circumferential wall, and that of the form-retaining pad the bottom sheet and the outer surface of the bottom wall part of the annular circumferential wall to which it is sealed form a smooth, flat surface, and in that the pad holder comprises a smooth receiving wall designed to receive the form-retaining pad in a positive mechanical engaging manner such that when the form-retaining pad is received by the pad holder there is no gap between the form-retaining pad and the smooth receiving wall of the pad holder. The invention is based on the insight that the outer surface of the bottom wall part of the annular circumferential wall of the known form-retaining pad is provided with a protruding elevation, which in some cases even has a non-uniform height distribution, on which protrusion the bottom sheet freely rests, leading to the undesired effect that an amount of hot water with the substance dissolved therein can flow back between the annular circumferential wall of the form-retaining pad and the inner wall of the pad holder. As a result of the measures according to the invention, that is, that the bottom sheet is sealed to the outer surface of the bottom wall part of the annular circumferential wall, and that the bottom sheet and the outer surface of the bottom wall part of the annular circumferential wall to which it is sealed form a smooth, flat surface, the form-retaining pad can be placed in a pad holder of a beverage preparation machine such that on the one hand they closely abut each other such that when the form-retaining pad is received by the pad holder there is no gap between form-retaining pad and the smooth receiving wall of the pad holder, and on the other hand the bottom sheet can not lift from the bottom wall. In this way the amount of hot water with the substance dissolved therein which can flow back between the annular circumferential wall of the form-retaining pad and the inner wall of the pad holder is at least strongly reduced.

In particular when the bottom sheet is sealed to the outer side of the bottom wall part of the annular circumferential wall by means of a circular seal it is possible to prevent any hot water with the substance dissolved therein from flowing back.

Preferably, the bottom sheet is fixed to a bottom side of the wall configuration. Here, it is even possible for the bottom sheet to be connected to the edges of the compartments located near the openings so that the compartments are closed at the bottom side by the bottom sheet. When the substance is powdery, this means that the substance cannot, for instance, move from one compartment to another compartment.

In an advantageous embodiment of an assembly according to the invention the bottom sheet and the top sheet are interconnected and are preferably interconnected at their longitudinal edges and are more preferably directly interconnected, wherein the interconnected parts form a joint. In this way the first covering can surround the stiffening body closely so that upon placement in a pad holder of a beverage preparation machine there is a close fit between form-retaining pad and pad holder resulting in a correct preparation of a beverage. More preferably, the top sheet is also connected to the top side of the stiffening body.

In case the stiffening body is manufactured from polypropylene it appears that providing a seal by applying heat to realize a bond between stiffening body and bottom sheet can be performed very reproducible and such that the bottom sheet and the outer surface of the bottom wall part of the annular circumferential wall to which it is sealed can form a flat surface in an easy and efficient manner.

In a further preferred embodiment of an assembly according to the invention a central part of bottom side of the stiffening body is provided with a bulging part extending beyond the outer surface of the bottom wall part of the annular circumferential wall. Preferably the bulging part has a surface extending parallel to the above-mentioned surface such that the form-retaining pad can be placed in a double pad holder in a positive mechanical engaging manner. In particular the surface forms a central part of the compartmenting wall configuration.

In a further embodiment of an assembly according to the invention the soluble substance comprises one or more from the group consisting of instant coffee, instant tea, a chocolate ingredient, instant milk powder/creamer, chicory, spices, optionally in combination with roast and ground coffee, tea, sugar or flavors. A form-retaining pad according to the invention is in particular advantageous when the soluble substance is a combination of instant coffee, instant milk powder/creamer and a chocolate ingredient. Since when used in preparing a beverage the form-retaining pad in accordance with the invention provides an improved flow of water without any pressure leakages now combinations of substances can be used in order to prepare a beverage with good quality which have not been used before. In particular a substance as chicory or a spice can now be used for the first time as substance in a form-retaining pad. For example, chai tea comprising a combination of tea, chicory, and spices, can be used in the form-retaining pad according to the invention

The present invention furthermore relates to a method of manufacturing a form-retaining pad according to the invention, in which method a pre-form stiffening body is used, said pre-form stiffening body having a top side and a bottom side, said top side having an open top side area, said bottom side having an open bottom area, said stiffening body further comprising an annular circumferential wall extending between the top side and the bottom side and a compartmenting wall configuration therein, which compartmenting wall configuration has a grid structure which is transmissive to liquid from the top side to the bottom side, said annular circumferential wall having a curved cross-section and a bottom wall part extending at least substantially parallel to the surface, said bottom wall part having a circular edge defining the open bottom area, said bottom wall part having a circular protruding rib protruding from the outer surface of the bottom wall part of the annular circumferential wall, characterized in that the method further comprises the step of providing said bottom wall part with at least one circular groove adjacent to said circular protruding rib, and the step of sealing the bottom sheet to the circular sealing rib by applying heat, such that when said bottom sheet is sealed to the outer surface of the bottom wall part of the annular circumferential wall a smooth, flat surface is obtained. In this way during sealing molten material from the circular protruding rib flows into the circular groove, resulting in a final product in which the bottom sheet and the outer surface of the bottom wall part of the annular circumferential wall to which it is sealed form a smooth, flat surface.

In a preferred embodiment of a method according to the invention the method further comprises the step of providing said at least one circular groove with a receiving volume which is equal to the volume of the circular rib protruding from the outer surface of the bottom wall part of the annular circumferential wall.

In an alternative advantageous method according to the invention the method comprises the step of providing a circular groove at either side of the circular rib, the total receiving volume of both circular grooves being equal to the volume of the circular rib protruding from the outer surface of the bottom wall part of the annular circumferential wall.

In particular in the step of sealing the bottom sheet heat is applied for such a time period that all the material of the circular rib protruding from the outer surface of the bottom wall part of the annular circumferential wall melts.

The bottom sheet and the outer surface of the bottom wall part of the annular circumferential wall to which it is sealed can be reproducibly sealed to form a flat surface in case the method further comprises the step of using pressure and/or ultrasound and/or high frequency during sealing.

The present invention in addition relates to a pre-form stiffening body for use in a method according to the invention, said pre-form stiffening body having a top side and a bottom side, said top side having an open top side area, said bottom side having an open bottom area, said stiffening body further comprising an annular circumferential wall extending between the top side and the bottom side and a compartmenting wall configuration therein, which compartmenting wall configuration has a grid structure which is transmissive to liquid from the top side to the bottom side, said annular circumferential wall having a curved cross-section and a bottom wall part extending at least substantially parallel to the surface, said bottom wall part having a circular edge defining the open bottom area, said bottom wall part having a circular protruding rib protruding from the outer surface of the bottom wall part of the annular circumferential wall, characterized in that said pre-form stiffening body comprises at least one circular groove adjacent to said circular protruding rib. Preferably said at least one circular groove has a receiving volume which is equal to the volume of the circular rib protruding from the outer surface of the bottom wall part of the annular circumferential wall.

In an alternative, advantageous embodiment of a pre-form stiffening body according to the invention said pre-form stiffening body comprises a circular groove at either side of the circular rib, the total receiving volume of both circular grooves being equal to the volume of the circular rib protruding from the outer surface of the bottom wall part of the annular circumferential wall.

A correct seal can be obtained in an easy way with a minimum amount of energy consumption in case the circular rib protrudes about 0.3 mm from the outer surface of the bottom wall part of the annular circumferential wall.

The invention furthermore relates to a method for preparing a beverage suitable for consumption using a form-retaining pad according to the invention or an assembly according to the invention, in which method a first form-retaining pad is provided having an amount of a first substance accommodated in the grid structure of the stiffening body and surrounded by the wall configuration and the top sheet and bottom sheet of the first covering of the first form-retaining pad, said bottom sheet and the outer surface of the bottom wall part of the annular circumferential wall to which it is sealed forming a smooth, flat surface, said method comprises placing the first form-retaining pad in a pad holder such that the pad holder receives the first pad in a positive mechanical engaging manner, such that no gap is present between the form-retaining pad and the smooth receiving wall of the pad holder, in which method then a liquid, such as hot water is supplied to the pad holder, in particular from a top side thereof and preferably under pressure, and is allowed to flow from the top sheet of the first covering through the substance towards and through open bottom area of the bottom side of the stiffening body and through the bottom sheet of the first pad, after which the beverage obtained in this manner is tapped via at least one outlet opening in a bottom side of the holder, and in which method backflow of the beverage from the open bottom area of the bottom side of the stiffening body and from the bottom sheet to the outer side of the annular circumferential wall of the stiffening body and the pad holder is prevented by said positive mechanical engagement of said smooth, flat surface and the pad holder. Preferably, the soluble substance in the form-retaining pad to be used in the method according to the invention may be a combination of instant coffee, instant milk powder/creamer and a chocolate ingredient or a combination of tea, chicory, and spices.

In an embodiment of a method for preparing a beverage suitable for consumption according to the invention a second pad provided with at least a second covering in which a second substance, different from the first substance present in the first form-retaining pad is included said method comprises placing the second pad in the pad holder in which method then a liquid, such as hot water is supplied to the pad holder, in particular from a top side thereof and preferably under pressure, and is allowed to flow from a top sheet of the second covering through the second substance towards and through a bottom sheet of the second covering, after which the second beverage obtained in this manner is tapped via at least one outlet opening in a bottom side of the holder and in which method the beverage and the second beverage are combined. Said second pad may be a soft pad suitable to be used in a double pad holder. Such soft pads are known per se. Alternatively, the second pad is a second form-retaining pad having an amount of a second substance accommodated in the grid structure of the stiffening body and surrounded by the wall configuration and the top sheet and bottom sheet of the first covering of the second form-retaining pad, said bottom sheet and the outer surface of the bottom wall part of the annular circumferential wall to which it is sealed forming a smooth, flat surface, said method comprises placing the second form-retaining pad in the pad holder such that the pad holder receives the second pad in a positive mechanical engaging manner, such that there is no gap between second form-retaining pad and the smooth receiving wall of the pad holder, in which method then a liquid, such as hot water is supplied to the pad holder, in particular from a top side thereof and preferably under pressure, and is allowed to flow from the top sheet of the first covering through the second substance towards and through open bottom area of the bottom side of the stiffening body and through the bottom sheet of the second pad, after which the second beverage obtained in this manner is tapped via at least one outlet opening in a bottom side of the holder, and in which method backflow of the second beverage from the open bottom area of the bottom side of the stiffening body and from the bottom sheet to the outer side of the annular circumferential wall of the stiffening body and the pad holder is prevented by said positive mechanical engagement of said smooth, flat surface and the pad holder, and in which method the beverage and the second beverage are combined. Preferably the second beverage is prepared first and the beverage prepared from the first form-retaining pad is prepared thereafter. Alternatively the beverage is prepared first and the second beverage prepared from the second (form-retaining) pad is prepared thereafter. Such a two step method for preparing a beverage allows a large number of combinations of beverages and additives or other substances to be realized in an easy way as desired by a user. In particular it is advantageous to prepare caffe latte or cappuccino by first using a first form-retaining pad containing an amount of milk powder/creamer and then using a second (form-retaining) pad containing an amount of (instant) coffee.

The invention finally relates to a kit of parts comprising a package, a first plurality of first form-retaining pads according to the invention, each comprising a first substance and a second plurality of pads, said package containing said first plurality of form-retaining pads and said second plurality of pads. In an embodiment of a kit of parts according to the invention at least a portion of the second plurality of pads is formed by second form-retaining pads according to the invention, each comprising a second substance which is different from the first substance. Preferably, the first and second substance comprises one or more from the group consisting of instant coffee, instant tea, a chocolate ingredient, instant milk powder/creamer, chicory, spices, optionally in combination with roast and ground coffee, tea, sugar or flavors. With such a kit of parts it is possible to prepare a large number of different beverages by using different combinations of beverages and second beverages as present in the kit of parts.

With reference to embodiments shown in the drawings, but only by way of non-limiting examples, the invention will now be explained in more detail. In these drawings:
Fig. 1 schematically shows, in perspective, an embodiment of an assembly of a beverage preparation machine comprising a pad holder and a form-retaining pad according to the invention;
Fig. 2 schematically shows, in cross-section, the pad holder of Fig. 1;
Fig. 3 schematically shows, in side view, the form-retaining pad according to the invention used in Fig. 1 with the bottom sheet partly broken away;
Fig. 4 schematically shows, in cross-section, the stiffening body of the form-retaining pad according to Fig. 3;
Fig. 5 schematically shows, in top view, the stiffening body as shown in Fig. 4;
Fig. 6 schematically shows, in perspective, an embodiment of a pre-form stiffening body according to the invention;
Fig. 7 schematically shows, in cross-section, the circular rib with circular grooves provided on the outer surface of the bottom wall part of the annular circumferential wall of the pre-form stiffening body of Fig. 6 on an enlarged scale, and
Fig. 8 schematically shows, in cross-section, the part of the pad shown in Fig. 7 after sealing has taken place, indicating that the bottom sheet and the outer surface of the bottom wall part of the annular circumferential wall to which it is sealed form a smooth, flat surface.

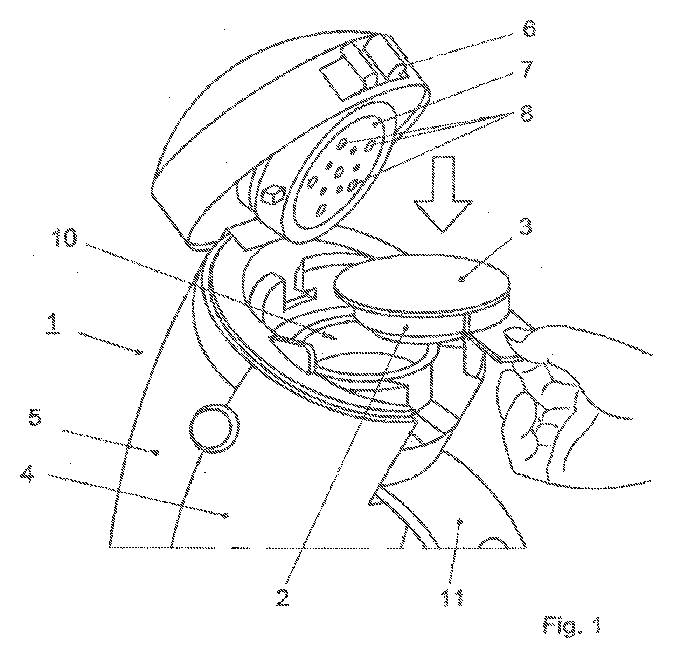

Fig. 1 shows an exemplary embodiment of part of a beverage preparation machine 1, in this case a beverage preparation machine of the Senseo® line manufactured by Philips, comprising a pad holder 2, in this example a standard double pad holder, and a form-retaining pad 3. The machine 1 comprises a foot (not shown) on which one or two cups can be disposed. The machine 1 further comprises a housing 4 and a water reservoir 5 which, in the present exemplary embodiment, is detachably connected to the housing 4, so that it can be filled with water in a simple manner. To the housing 4, a closable lid 6 is hingedly connected. When the lid 6 is opened, which is represented in Fig.1, access is obtained to the internal part of the machine 1. As represented in Fig. 1, in this internal part, the pad holder 2 can be placed, which pad holder 2 is designed to receive the form-retaining pad 3. The form-retaining pad 3 is filled with a substance which is soluble in a liquid, in the shown embodiment water.

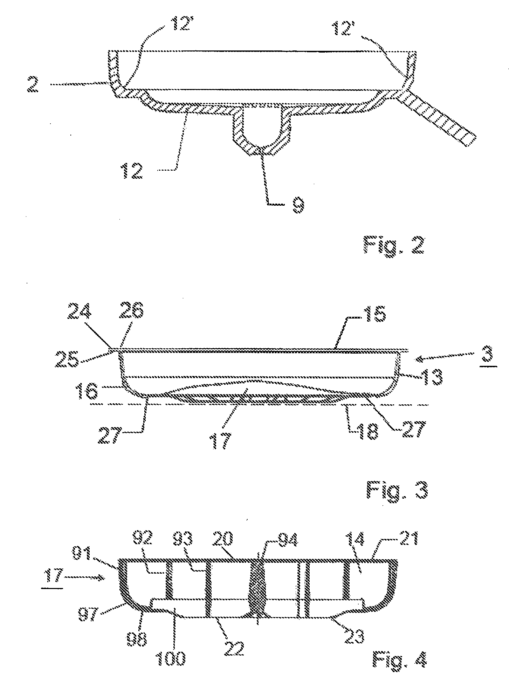

The lid 6 is provided with an internal closing lid 7 which, in closed condition, closes off the topside of the pad holder 2 with the form-retaining pad 3 received therein. At least in this closed condition the pad holder 2 receives the pad 3 in a positive mechanically engaging manner. In the internal closing lid 7, supply openings 8 are present for supplying water under super-atmospheric pressure to the chamber formed by the internal closing lid 7 and the pad holder 2, in which chamber the form-retaining pad 3 is received. Adjacent to the bottom side, the holder 2 is provided with at least one outflow opening 9 (Fig. 2) through which water, having been pressed through the substance situated in the pad 3, and thus containing therein dissolved substance, can exit from the holder 2. From the holder 2, the thus prepared beverage flows into a chamber 10 to which an outflow 11 is connected. From the outflow 11, the beverage flows into the one or two cups disposed there under.

Fig. 2 shows an exemplary embodiment of the pad holder 2 in cross-section which is provided with a bottom 12 with a relief structure for forming grooves along which the beverage can flow to a fluid jet forming restriction 9. The pad holder comprises a smooth receiving wall 12' for receiving the form-retaining pad 3.

In Fig. 3 a form-retaining pad 3 for preparing a beverage suitable for consumption according to the invention is shown in perspective. The form-retaining pad 3 is provided with at least one first covering 13 in which a water-soluble substance 14 (Fig. 4) is included.

The covering 13 comprises a top sheet 15 e.g. manufactured from sheet-shaped filter material and a bottom sheet 16 e.g. manufactured from sheet-shaped filter material. In this example, the top sheet 15 and the bottom sheet 16 are each manufactured from filter paper. However, other filter materials such as filter materials of a synthetic are also possible.

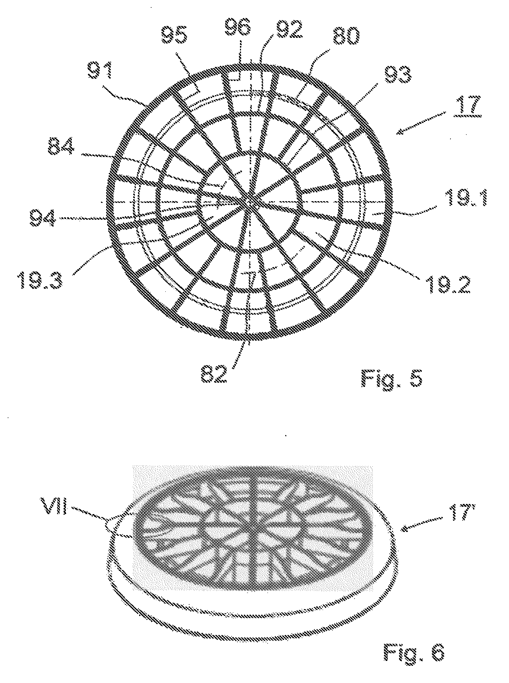

Generally, the top sheet of the form-retaining pad will be formed by a layer of filter material, such as filter paper. However, it is also possible for the form-retaining pad to be designed with a top sheet consisting of a layer of material non-transmissive to liquid, which is provided in a withdrawable manner. The top sheet may be provided with a plurality of apertures for receiving pressurized water. In an embodiment, the top sheet is closed except for these apertures. This may be achieved for example by manufacturing the top sheet by providing apertures in an otherwise impermeable substrate. Then, the apertures cause the permeability of the top sheet. It is not excluded however that the top sheet is permeable outside the apertures as well. This can be the case when the top sheet is made from a material that has some permeability by itself. Then, the permeability of the top sheet is not exclusively caused by the apertures. Preferably, however, the permeability of the top sheet is for the largest part caused by the apertures. In general, the top sheet outside the apertures may include a paper layer covered with a polypropylene layer. In between the paper layer and the polypropylene layer, a polyester layer may be provided. Preferably, the polypropylene layer forms an outer surface of the top sheet. The outer surface of the top sheet may form an outer surface of the pad. By using such materials for the top sheet, closure of the top sheet outside the apertures may be achieved. The bottom sheet may, in general, be similar to and/or include a similar material as the first permeable layer. This may facilitate a manufacturing process of the pad. However, alternatively, the bottom sheet may be different from and/or include a different material than the first permeable layer. The apertures preferably have a size dimensioned for establishing swirling motion of the water inside the filling. The form-retaining pad is further provided with a stiffening body 17 (in Fig. 4 shown in cross-section and in top view in Fig. 5) which is included between the top sheet 15 and bottom sheet 16. The top sheet and bottom sheet each extend at least partly substantially parallel to a surface 18.

The stiffening body is provided with a compartmenting wall configuration forming compartments 19.1 located on an outer ring 80, compartments 19.2 located on a ring 82 within the outer ring, compartments 19.3 located on a ring 84 within the ring 82. So, the stiffening body 17 comprises a plurality of relatively small compartments 19.1, 19.2, 19.3. Each compartment 19 is provided with an opening 20 in a top side 21 of the stiffening body 17. Also, each compartment 19 is provided with an opening 22 in a bottom side 23 of the stiffening body 17. The top side 21 of the stiffening body 17 is adjacent to the top sheet 15 and the bottom side 23 of the stiffening body 17 is adjacent to the bottom sheet 16. The compartmenting wall configuration thus comprises a grid structure which is transmissive to liquid from the top side to the bottom side.

The stiffening body 17 is provided with an annular circumferential wall 91, with two further annular walls 92 and 93 concentrically extending within the circumferential wall 91. From a central pen 94, eight walls 95 extend in a radially rotation-symmetrically distributed manner to the circumferential wall 91. In the middle between each two walls 95, a radially extending wall 96 is provided between the annular wall 93 and the circumferential wall 91.

As shown in Fig. 4, the circumferential wall has a curved cross-section 97 and a bottom wall part 98 extending at least substantially parallel to the surface 18. The bottom wall part 98 has a circular edge 99 defining an open bottom area 100 of the bottom side of the stiffening body 17. Further, it is visible from Fig. 4 that the annular wall 93 has a greater height than the annular wall 92, with the annular wall 93 projecting through the said open bottom area 100 thus proving a bulging part of the stiffening body. The walls 95 and 96 follow the profile thus formed by the annular walls, the difference in height between the annular walls 95 and 96 being compensated on the bottom side by a smooth transition in the shape of an extended S. Thus, the stiffening body 17 is provided with bulging central part in relation to the circumferential wall 91, which in the shown embodiment extends about 1.6 mm from the outer surface of the bottom wall part 98. Further, the central pen 94 has a somewhat shorter design than the annular wall 93, so the compartments adjacent to the central pen 94 are interconnected. The form-retaining pad 3 has a dimension, i.e. a diameter, of about 59.5 mm in the direction of the surface 18 and a dimension of about 12.6 mm in a direction perpendicular (i.e. a thickness) to the surface 18. In the present embodiment the surface 18 is thus formed by the central part of the bulging portion as can be seen in Fig. 3.

In this example, the stiffening body is manufactured from polypropylene, but in alternative embodiments can be manufactured from any other synthetic, such as plastic, and from other materials such as a biodegradable material.

In the example of Fig. 3, the top sheet 15 and the bottom sheet 16 are directly interconnected at longitudinal edges 24, 25 of the top and bottom sheet and, in this example, moreover forming a circular joint 26. The top sheet 15 is also connected to the top side 21 of the stiffening body 17 and the bottom sheet 16 is sealed or fixed to the outer side of the bottom wall part 98 by means of a circular seal 27. In the present embodiment the bottom sheet 16 is also fixed or sealed to the bottom side 23 of the wall configuration.

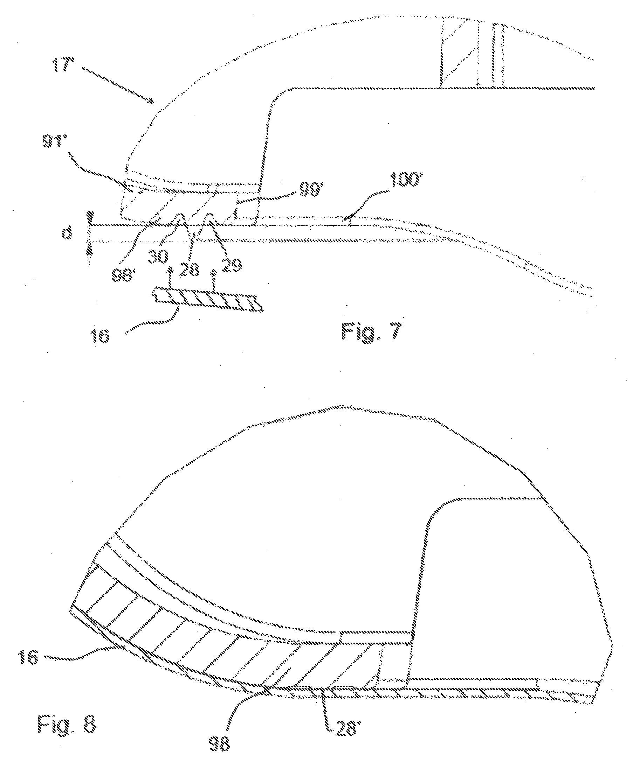

The bottom sheet 16 and the outer surface of the bottom wall part 98 of the annular circumferential wall 91 to which it is fixed are sealed such that a smooth, flat surface is formed (see also Fig. 8), so that it can be received in the pad holder in a positive mechanical engaging manner. In this way the shapes of the pad and pad holder are in conformity with each other and when placed in the machine 1 do not allow gaps to be formed in between them. In this way the pressure during beverage preparation can remain very stable and no backflow on the outer side of the wall 91 can take place, so that the beverage can be prepared in a very reproducible manner.

In Fig. 6 an embodiment of a pre-form stiffening body 17' according to the invention is schematically shown, in perspective, and in Fig. 7 an enlargement of a part of the pre-form stiffening body 17' is shown. This pre-form stiffening body 17' is used in a method for manufacturing the form-retaining pad as described above. The bottom wall part 98' of this pre-form stiffening body 17' has a circular protruding rib 28 protruding a distance d from the outer surface of the bottom wall part 98' of the annular circumferential wall 91'. At either side of the circular rib 28 a circular groove 29, 30 is provided, the total receiving volume of both circular grooves 29, 30 being equal to the volume of the circular rib 28 protruding from the outer surface of the bottom wall part of the annular circumferential wall. In another, not shown, embodiment only one groove having a receiving volume which is equal to the volume of the circular rib protruding from the outer surface of the bottom wall part of the annular circumferential wall can be provided.

In the present example the circular rib 28 protrudes with a distance d of about 0.3 mm from the outer surface of the bottom wall part of the annular circumferential wall. Such a distance will provide a circular rib with sufficient material to realize a correct seal between the bottom sheet and the stiffening body. Said seal is defined by the circular rib 28. Such a seal is realized in a method of manufacturing a form-retaining pad using said pre-form stiffening body by moving the bottom sheet 16 (shown in part in Fig. 7) towards the circular rib until contact is established and by applying heat to the circular rib 28 and bottom sheet 16. At least at the position of the seal to be provided the bottom sheet is provided with a sealing medium which allows a fixation (optionally after cooling down) to the molten material of the circular rib. The heat is applied for such a time period that all the material of the circular rib protruding from the outer surface of the bottom wall part of the annular circumferential wall melts. This molten material can flow in the circular grooves and thus the final product displays a smooth, flat surface at the location of the outer surface of the bottom wall part. Depending on the material of which the bottom sheet is formed during sealing a certain amount of pressure may be used, or use may be made of ultrasound or high-frequency sealing techniques which are known per se. Such techniques, in particular pressure, may also facilitate flowing of molten material into the grooves.

As a result of the smooth, flat surface an improved flow of water through the form-retaining pad is provided as is indicated in Fig. 8, in which the molten protruding rib is indicated with reference number 28'. As a result no pressure leakages occur, such that now a variety of substances can be used for the first time in order to prepare a beverage with good quality.

Below a method for preparing a beverage suitable for consumption will be described based on using a first form-retaining pad accommodating instant coffee, instant milk powder/creamer and a chocolate ingredient.

In an alternative embodiment, a method for preparing a beverage suitable for consumption will be described based on using a first form-retaining pad accommodating instant coffee optionally in combination with roast and ground coffee (also called the main substance or substance for preparing the main beverage or beverage) and a second form-retaining pad accommodating a instant milk powder/creamer (also called the second substance for providing the second beverage).

In a further alternative embodiment the first form-retaining pad can accommodate instant milk powder/creamer, and the second soft pad suitable for a double pad holder contains roast and ground coffee.

In the exemplary embodiment for a method for preparing a beverage the first form-retaining pad having an amount of instant coffee, instant milk powder/creamer and a chocolate ingredient is placed in the double pad holder, as shown in Fig. 1, such that the pad holder receives the first pad in a positive mechanical engaging manner. Thereafter the lid of the machine is closed and then hot water is supplied under pressure to the pad holder from a top side thereof. The liquid is allowed to flow from the top sheet of the first covering through the substance towards and through open bottom area of the bottom side of the stiffening body and through the bottom sheet of the first pad, during which the instant coffee, instant milk powder/creamer and chocolate ingredient dissolves in the hot water and the main beverage obtained in this manner is tapped via at least one outlet opening in a bottom side of the holder and is collected in a cup placed on the foot of the machine. Since backflow of the main beverage from the open bottom area of the bottom side of the stiffening body and from the bottom sheet to the outer side of the annular circumferential wall of the stiffening body and the pad holder is prevented by said positive mechanical engagement of said smooth, flat surface and the pad holder a good quality of the beverage is ensured.

In an alternative embodiment for a method for preparing a beverage the second form-retaining pad accommodating an amount of instant milk powder/creamer is placed in the double pad holder, as shown in Fig. 1, such that the pad holder receives the second pad in a positive mechanical engaging manner. Thereafter the lid of the machine is closed and then hot water is supplied under pressure to the pad holder from a top side thereof. The liquid is allowed to flow from the top sheet of the first covering through the substance towards and through open bottom area of the bottom side of the stiffening body and through the bottom sheet of the second pad, during which the instant milk powder/creamer dissolves in the hot water and the second beverage obtained in this manner is tapped via at least one outlet opening in a bottom side of the holder and is collected in a cup placed on the foot of the machine. Since backflow of the second beverage from the open bottom area of the bottom side of the stiffening body and from the bottom sheet to the outer side of the annular circumferential wall of the stiffening body and the pad holder is prevented by said positive mechanical engagement of said smooth, flat surface and the pad holder a good quality of the beverage is ensured. Thereafter the second form-retaining pad is removed from the machine and the first form-retaining pad accommodating instant coffee optionally in combination with roast and ground coffee is placed in the pad holder such that the pad holder receives the first pad in a positive mechanical engaging manner, again leaving no gap between the form-retaining pad and the smooth receiving wall of the pad holder. Then again hot water is supplied under pressure to the pad holder and is allowed to flow from the top sheet of the first covering through the first substance towards and through open bottom area of the bottom side of the stiffening body and through the bottom sheet of the first pad, after which the main beverage obtained in this manner is tapped via the outlet opening in the bottom side of the holder and is collected in the cup placed on the foot of the machine already containing the second beverage, such that the main beverage and the second beverage are combined. Since backflow of the main beverage from the open bottom area of the bottom side of the stiffening body and from the bottom sheet to the outer side of the annular circumferential wall of the stiffening body and the pad holder is prevented by said positive mechanical engagement of said smooth, flat surface and the pad holder a main beverage with good quality is obtained.

Thus according to the invention it is possible to prepare a number of beverages with good quality, and to facilitate a user in combining several coffee based beverages and second beverages at his or her own choice a kit of parts is provided comprising a package a first plurality of first form-retaining pads, each comprising a first substance, such as for example instant coffee and a second plurality of (for example) second form-retaining pads each comprising a second substance which is different from the first substance, and e.g. chosen from the group consisting of instant milk powder/creamer, said package containing said first and said second plurality of form-retaining pads. In an alternative embodiment the package comprises a first plurality of first form-retaining pads, each comprising a first substance, such as for example instant milk powder/creamer and a second plurality of second conventional pads comprising roast and ground coffee.

## Claims

1. A form-retaining pad (3) for preparing a beverage suitable for consumption, provided with:
- at least a first covering (13) in which a substance (14) which is soluble in a liquid is included, wherein said at least first covering comprises a top sheet (15), manufactured from a material non-transmissive to the soluble substance, and a bottom sheet (16), manufactured from a material non-transmissive to the soluble substance, but transmissive to the substance dissolved in a liquid, wherein the top sheet and the bottom sheet extend at least partly substantially parallel to each other and to a surface (18),
- a stiffening body (17), which is placed between the top sheet and the bottom sheet, wherein the stiffening body has a top side (21) adjacent to the top sheet and a bottom side (23) adjacent to the bottom sheet, said top side having an open top side area (28), said bottom side having an open bottom are (22), said stiffening body further comprising an annular circumferential wall (91) extending between the top side and the bottom side and a compartmenting wall configuration therein, which compartmenting wall configuration has a grid structure which is transmissive to liquid from the top side to the bottom side, in which grid structure at least a part of the soluble substance is accommodated and each compartment (19.1, 19.2, 19.3) formed by the wall configuration is surrounded by that wall configuration, the top sheet and the bottom sheet, said annular circumferential wall having a curved cross-section and a bottom wall part (98) extending at least substantially parallel to the surface, said bottom wall part having a circular edge defining the open bottom area,
**characterized in that**, said bottom sheet is sealed to the outer surface of the bottom wall part (98) of the annular circumferential wall, and said bottom sheet and the outer surface of the bottom wall part of the annular circumferential wall (91) to which it is sealed form a smooth, flat surface.

2. A form-retaining pad according to claim 1, **characterized in that** the bottom sheet is sealed to the outer side of the bottom wall part of the annular circumferential wall by means of a circular seal.

3. A form-retaining pad according to claim 1 or 2, **characterized in that** the bottom sheet is also fixed to a bottom side of the wall configuration.

4. A form-retaining pad according to any one of the preceding claims, **characterized in that** the bottom sheet and the top sheet are interconnected and are preferably interconnected at their longitudinal edges (24,25) and are more preferably directly interconnected, wherein the interconnected parts form a joint.

5. A form-retaining pad according to any one of the preceding claims, **characterized in that** the stiffening body is manufactured from polypropylene.

6. A form-retaining pad according to any one of the preceding claims, **characterized in that** a central part of the bottom side of the stiffening body is provided with a bulging part extending beyond the outer surface of the bottom wall part of the annular circumferential wall.

7. A form-retaining pad according to claim 6, **characterized in that** the bulging part has a surface extending parallel to the above-mentioned surface.

8. A form-retaining pad according to claim 7, **characterized in that** the surface forms a central part of the compartmenting wall configuration.

9. A form-retaining pad according to any one of the preceding claims, in which the soluble substance comprises one or more from the group consisting of instant coffee, instant tea, a chocolate ingredient, instant milk powder/creamer, chicory, spices, optionally in combination with roast and ground coffee, tea, sugar or flavors.

10. A form-retaining pad according to claim 9, in which the soluble substance is a combination of instant coffee, instant milk powder/creamer and a chocolate ingredient.

11. An assembly of a beverage preparation machine (1) comprising a pad holder (2) and a form-retaining pad (3) according to any one of claims 1 - 10 for preparing a beverage suitable for consumption, provided with:
- at least a first covering (3), in which a substance (14) which is soluble in a liquid is included, wherein said at least first covering comprises a top sheet (15), manufactured from a material non-transmissive to the soluble substance, and a bottom sheet (16), manufactured from a material non-transmissive to the soluble substance, but transmissive to the substance dissolved in a liquid, wherein the top sheet and the bottom sheet extend at least partly substantially parallel to each other and to a surface (18),
- a stiffening body (17), which is placed between the top sheet and the bottom sheet, wherein the stiffening body has a top side (21) adjacent to the top sheet and a bottom side (23) adjacent to the bottom sheet, said top side having an open top side area (20), said bottom side having an open bottom area (22), said stiffening body further comprising an annular circumferential wall (91) extending between the top side and the bottom side and a compartmenting wall configuration therein, which compartmenting wall configuration has a grid structure which is transmissive to liquid from the top side to the bottom side, in which grid structure at least a part of the soluble substance is accommodated and each compartment (19.1, 19.2, 19.3) formed by the wall configuration is surrounded by that wall configuration, the top sheet and the bottom sheet, said annular circumferential wall having a curved cross-section and a bottom wall part (90) extending at least substantially parallel to the surface, said bottom wall part having a circular edge defining the open bottom area,
**characterized in that**, said bottom sheet is sealed to the outer surface of the bottom wall part (98) of the annular circumferential wall, and that of the form-retaining pad the bottom sheet and the outer surface of the bottom wall part of the annular circumferential wall to which it is sealed form a smooth, flat surface, and **in that** the pad holder comprises a smooth receiving wall designed to receive the form-retaining pad in a positive mechanical engaging manner such that when the form-retaining pad is received by the pad holder there is no gap between form-retaining pad and the smooth receiving wall of the pad holder.

12. A method of manufacturing a form-retaining pad according to any one of the preceding claims 1 to 10, in which method a pre-form stiffening body (17) is used, said pre-form stiffening body having a top side and a bottom side, said top side having an open top side area, said bottom side having an open bottom area, said stiffening body further comprising an annular circumferential wall extending between the top side and the bottom side and a compartmenting wall configuration therein, which compartmenting wall configuration has a grid structure which is transmissive to liquid from the top side to the bottom side, said annular circumferential wall having a curved cross-section and a bottom wall part extending at least substantially parallel to the surface, said bottom wall part having a circular edge defining the open bottom area, said bottom wall part having a circular protruding rib (28) protruding from the outer surface of the bottom wall part of the annular circumferential wall, **characterized in that** said method comprises the step of providing said bottom wall part with at least one circular groove (29,30) adjacent to said circular protruding rib, the step of sealing the bottom sheet to the circular protruding rib by applying heat, such that when said bottom sheet is sealed to the outer surface of the bottom wall part of the annular circumferential wall a smooth, flat surface is obtained.

13. A method of manufacturing a form-retaining pad according to claim 12, **characterized in that** the method further comprises the step of providing said at least one circular groove with a receiving volume which is equal to the volume of the circular rib protruding from the outer surface of the bottom wall part of the annular circumferential wall.

14. A method of manufacturing a form-retaining pad according to claim 12, **characterized in that** the method comprises the step of providing a circular groove at either side of the circular rib, the total receiving volume of both circular grooves being equal to the volume of the circular rib protruding from the outer surface of the bottom wall part of the annular circumferential wall.

15. A method of manufacturing a form-retaining pad according to claim 12, 13 or 14, **characterized in that** in the step of sealing the bottom sheet heat is applied for such a time period that all the material of the circular rib protruding from the outer surface of the bottom wall part of the annular circumferential wall melts.

16. A method of manufacturing a form-retaining pad according to any one of the claims 12 to 15, **characterized in that** the method further comprises the step of using pressure and/or ultrasound and/or high frequency during sealing.

17. A pre-form stiffening body (17) for use in a method according to any one of the claims 12 - 16, said pre-form stiffening body having a top side and a bottom side, said top side having an open top side area, said bottom side having an open bottom area, said stiffening body further comprising an annular circumferential wall extending between the top side and the bottom side and a compartmenting wall configuration therein, which compartmenting wall configuration has a grid structure which is transmissive to liquid from the top side to the bottom side, said annular circumferential wall having a curved cross-section and a bottom wall part extending at least substantially parallel to the surface, said bottom wall part having a circular edge defining the open bottom area, said bottom wall part having a circular protruding rib (20) protruding from the outer surface of the bottom wall part of the annular circumferential wall, **characterized in that** said pre-form stiffening body comprises at least one circular groove (29, 30) adjacent to said circular protruding rib.

18. A pre-form stiffening body according to claim 17, **characterized in that** said at least one circular groove has a receiving volume which is equal to the volume of the circular rib protruding from the outer surface of the bottom wall part of the annular circumferential wall.

19. A pre-form stiffening body according to claim 17, **characterized in that** said pre-form stiffening body comprises a circular groove at either side of the circular rib, the total receiving volume of both circular grooves being equal to the volume of the circular rib protruding from the outer surface of the bottom wall part of the annular circumferential wall.

20. A pre-form stiffening body according to claim 17, 18 or 19, **characterized in that** circular rib protrudes about 0.3 mm from the outer surface of the bottom wall part of the annular circumferential wall.

21. A method for preparing a beverage suitable for consumption using a form-retaining pad according to any one of the claims 1 - 10 or an assembly according to claim 11, in which method a first form-retaining pad is provided having an amount of a first substance accommodated in the grid structure of the stiffening body and surrounded by the wall configuration and the top sheet and bottom sheet of the first covering of the first form-retaining pad, said bottom sheet and the outer surface of the bottom wall part of the annular circumferential wall to which it is sealed forming a smooth, flat surface, said method comprises placing the first form-retaining pad in a pad holder such that the pad holder receives the first pad in a positive mechanical engaging manner, such that no gap is present between the form-retaining pad and the smooth receiving wall of the pad holder, in which method then a liquid, such as hot water is supplied to the pad holder, in particular from a top side thereof and preferably under pressure, and is allowed to flow from the top sheet of the first covering through the substance towards and through open bottom area of the bottom side of the stiffening body and through the bottom sheet of the first pad, after which the beverage obtained in this manner is tapped via at least one outlet opening in a bottom side of the holder, and in which method backflow of the beverage from the open bottom area of the bottom side of the stiffening body and from the bottom sheet to the outer side of the annular circumferential wall of the stiffening body and the pad holder is prevented by said positive mechanical engagement of said smooth, flat surface and the pad holder.

22. A method for preparing a beverage suitable for consumption using a form-retaining pad according to claim 21, in which method a second form-retaining pad is provided having an amount of a second substance, different from the first substance, accommodated in the grid structure of the stiffening body and surrounded by the wall configuration and the top sheet and bottom sheet of the first covering of the second form-retaining pad, said bottom sheet and the outer surface of the bottom wall part of the annular circumferential wall to which it is sealed forming a smooth, flat surface, said method comprises placing the second form-retaining pad in the pad holder such that the pad holder receives the second pad in a positive mechanical engaging manner, such that there is no gap between second form-retaining pad and the smooth receiving wall of the pad holder, in which method then a liquid, such as hot water is supplied to the pad holder, in particular from a top side thereof and preferably under pressure, and is allowed to flow from the top sheet of the first covering through the second substance towards and through open bottom area of the bottom side of the stiffening body and through the bottom sheet of the second pad, after which the second beverage obtained in this manner is tapped via at least one outlet opening in a bottom side of the holder, and in which method backflow of the second beverage from the open bottom area of the bottom side of the stiffening body and from the bottom sheet to the outer side of the annular circumferential wall of the stiffening body and the pad holder is prevented by said positive mechanical engagement of said smooth, flat surface and the pad holder, and in which method the beverage and the second beverage are combined.

23. A method for preparing a beverage suitable for consumption using a form-retaining pad according to claim 22, in which method the second beverage is prepared first and the beverage prepared from the first form-retaining pad is prepared thereafter.

24. A method for preparing a beverage suitable for consumption using a form-retaining pad according to claim 22, in which method the beverage is prepared first and the second beverage prepared from the second form-retaining pad is prepared thereafter.

25. A method for preparing a beverage suitable for consumption using a form-retaining pad according to claim 22 - 24, wherein the first substance in the first form-retaining pad is instant coffee and the second substance in the second form-retaining pad is instant milk powder/creamer.

26. A kit of parts comprising a package, a first plurality of first form-retaining pads according to any one of the claims 1 - 10, each comprising a first substance, and a second plurality of pads, said package containing said first of form-retaining pads and said second plurality of pads.

27. A kit of parts according to claim 26, wherein the first substance in the first form-retaining pad is instant milk powder/creamer and the second substance in the second pad is roast and ground coffee.

28. A kit of parts according to claim 26, wherein at least a portion of the second plurality of pads is formed by second form-retaining pads according to any one of the claims 1 - 10, each comprising a second substance which is different from the first substance.

29. A kit of parts according to claim 28, wherein the first substance in the first form-retaining pad is instant coffee and the second substance in the second form-retaining pad is instant milk powder/creamer.

## Patentansprüche

1. Formstabiles Pad (3) zur Zubereitung eines für den Konsum geeigneten Getränks, bereitgestellt mit:
- mindestens einer ersten Abdeckung (13), in der eine in Wasser lösliche Substanz (14) enthalten ist, wobei die mindestens erste Abdeckung ein Oberblatt (15), hergestellt aus einem für die lösliche Substanz nicht durchlässigen Material, und ein Unterblatt (16), hergestellt aus einem für die lösliche Substanz nicht durchlässigen Material, aber durchlässig für die in einer Flüssigkeit aufgelöste Substanz, umfasst, wobei das Oberblatt und das Unterblatt mindestens teilweise im Wesentlichen parallel zueinander und zu einer Oberfläche (18) verlaufen,
- einem Versteifungskörper (17), der zwischen dem Oberblatt und dem Unterblatt platziert ist, wobei der Versteifungskörper eine Oberseite (21), angrenzend an das Oberblatt, und eine Unterseite (23), angrenzend an das Unterblatt, hat, wobei die Oberseite einen offenen Oberseitenbereich (20) hat, die Unterseite einen offenen Unterseitenbereich (22) hat, der Versteifungskörper ferner umfassend eine ringförmige umlaufende Wand (91), verlaufend zwischen der Oberseite und der Unterseite, mit darin einer aufteilenden Wandkonfiguration, die eine Gitterstruktur hat, die für Flüssigkeit von der Oberseite zu der Unterseite durchlässig ist, in welcher Gitterstruktur mindestens ein Teil der löslichen Substanz aufgenommen ist und jedes von der Wandkonfiguration gebildete Abteil (19.1, 19.2, 19.3) von dieser Wandkonfiguration umgeben ist, wobei das Oberblatt und das Unterblatt der ringförmigen umlaufenden Wand einen gebogenen Querschnitt und einen unteren Wandteil (98), der mindestens im Wesentlichen zu der Oberfläche verläuft, haben, wobei der untere Wandteil einen kreisförmigen Rand hat, der den offenen Unterseitenbereich begrenzt,
**dadurch gekennzeichnet, dass** das Unterblatt zu der Außenfläche des unteren Wandteils (98) der ringförmigen umlaufenden Wand versiegelt ist und das Unterblatt und die Außenfläche des unteren Wandteils der ringförmigen umlaufenden Wand (91), zu der es versiegelt ist, eine glatte, flache Oberfläche bilden.

2. Formstabiles Pad nach Anspruch 1, **dadurch gekennzeichnet, dass** das Unterblatt zu der Außenseite des unteren Wandteils der ringförmigen umlaufenden Wand mit einem kreisförmigen Siegel versiegelt ist.

3. Formstabiles Pad nach Anspruch 1 oder 2, **dadurch gekennzeichnet, dass** das Unterblatt auch an einer Unterseite der Wandkonfiguration befestigt ist.

4. Formstabiles Pad nach einem der vorhergehenden Ansprüche, **dadurch gekennzeichnet, dass** das Unterblatt und das Oberblatt miteinander verbunden sind und bevorzugt an ihren Längskanten (24, 25) miteinander verbunden sind und bevorzugter direkt miteinander verbunden sind, wobei die miteinander verbundenen Teile einen Stoß bilden.

5. Formstabiles Pad nach einem der vorhergehenden Ansprüche, **dadurch gekennzeichnet, dass** der Versteifungskörper aus Polypropylen hergestellt ist.

6. Formstabiles Pad nach einem der vorhergehenden Ansprüche, **dadurch gekennzeichnet, dass** ein mittlerer Teil der Unterseite des Versteifungskörpers mit einem gewölbten Teil versehen ist, der über die Außenfläche des unteren Wandteils der ringförmigen umlaufenden Wand hinaus verläuft.

7. Formstabiles Pad nach Anspruch 6, **dadurch gekennzeichnet, dass** der gewölbte Teil eine parallel zu der oben genannten Fläche verlaufende Oberfläche hat.

8. Formstabiles Pad nach Anspruch 7, **dadurch gekennzeichnet, dass** die Oberfläche einen mittleren Teil der aufteilenden Wandkonfiguration bildet.

9. Formstabiles Pad nach einem der vorhergehenden Ansprüche, in dem die lösliche Substanz eines oder mehrere aus der Gruppe, bestehend aus Instantkaffee, Instanttee, eine Schokoladezutat, Instantmilchpulver/- milchaufschäumer, Zichorie, Gewürze, optional in Kombination mit geröstetem und gemahlenem Kaffee, Tee, Zucker oder Aromen, umfasst.

10. Formstabiles Pad nach Anspruch 9, in dem die lösliche Substanz eine Kombination aus Instantkaffee, Instantmilchpulver/-milchaufschäumer und einer Schokoladezutat ist.

11. Anordnung eines Getränkezubereitungsautomaten (1), umfassend einen Padhalter (2) und ein formstabiles Pad (3) nach einem der Ansprüche 1-10 zur Zubereitung eines für den Konsum geeigneten Getränks, bereitgestellt mit:
- mindestens einer ersten Abdeckung (13), in der eine in Wasser lösliche Substanz (14) enthalten ist, wobei die mindestens erste Abdeckung ein Oberblatt (15), hergestellt aus einem für die lösliche Substanz nicht durchlässigen Material, und ein Unterblatt (16), hergestellt aus einem für die lösliche Substanz nicht durchlässigen Material, aber durchlässig für die in einer Flüssigkeit aufgelöste Substanz, umfasst, wobei das Oberblatt und das Unterblatt mindestens teilweise im Wesentlichen parallel zueinander und zu einer Oberfläche (18) verlaufen,
- einem Versteifungskörper (17), der zwischen dem Oberblatt und dem Unterblatt platziert ist, wobei der Versteifungskörper eine Oberseite (21), angrenzend an das Oberblatt, und eine Unterseite (23), angrenzend an das Unterblatt, hat, wobei die Oberseite einen offenen Oberseitenbereich (28) hat, die Unterseite einen offenen Unterseitenbereich (22) hat, der Versteifungskörper ferner umfassend, eine ringförmige umlaufende Wand (91), verlaufend zwischen der Oberseite und der Unterseite, mit darin einer aufteilenden Wandkonfiguration, die eine Gitterstruktur hat, die für Flüssigkeit von der Oberseite zu der Unterseite durchlässig ist, in welcher Gitterstruktur mindestens ein Teil der löslichen Substanz aufgenommen ist, und jedes von der Wandkonfiguration gebildete Abteil (19.1, 19.2, 19.3) von dieser Wandkonfiguration umgeben ist, wobei das Oberblatt und das Unterblatt der ringförmigen umlaufenden Wand einen gebogenen Querschnitt haben und einen unteren Wandteil (98) haben, der mindestens im Wesentlichen zu der Oberfläche verläuft, wobei der untere Wandteil einen kreisförmigen Rand hat, der den offenen Unterseitenbereich begrenzt,
**dadurch gekennzeichnet, dass** das Unterblatt zu der Außenfläche des unteren Wandteils (98) der ringförmigen umlaufenden Wand versiegelt ist, und dass von dem formstabilen Pad das Unterblatt und die Außenfläche des unteren Wandteils der ringförmigen umlaufenden Wand, zu der es versiegelt ist, eine glatte, flache Oberfläche bilden und dass der Padhalter eine glatte, aufnehmende Wand umfasst, konzipiert zum Aufnehmen des formstabilen Pads auf eine positive mechanisch eingreifende Weise, sodass, wenn das formstabile Pad von dem Padhalter aufgenommen wird, es keine Lücke zwischen dem formstabilen Pad und der glatten, aufnehmenden Wand des Padhalters gibt.

12. Verfahren zur Herstellung eines formstabilen Pads nach einem der vorhergehenden Ansprüche 1 bis 10, in welchem Verfahren ein vorgeformter Versteifungskörper (17) mit einer Oberseite und einer Unterseite verwendet wird, wobei die Oberseite einen offenen Oberseitenbereich hat, die Unterseite einen offenen Unterseitenbereich hat, der Versteifungskörper ferner umfassend eine ringförmige umlaufende Wand, verlaufend zwischen der Oberseite und der Unterseite mit darin einer aufteilenden Wandkonfiguration, die eine Gitterstruktur hat, die für Flüssigkeit von der Oberseite zu der Unterseite durchlässig ist, wobei die ringförmige umlaufende Wand einen gebogenen Querschnitt und einen im Wesentlichen parallel zu der Oberfläche verlaufenden unteren Wandteil hat, wobei der untere Wandteil einen kreisförmigen Rand hat, der den offenen Unterseitenbereich definiert, wobei der untere Wandteil eine kreisförmige hervorstehende Rippe (28) hat, die von der Außenfläche des unteren Wandteils der ringförmigen umlaufenden Wand hervorsteht, **dadurch gekennzeichnet, dass** das Verfahren den Schritt umfasst, in dem der untere Wandteil mit der mindestens einen kreisförmigen Rille (29, 30) neben der kreisförmigen hervorstehenden Rippe bereitgestellt ist, den Schritt, in dem das Unterblatt an der kreisförmigen hervorstehenden Rippe durch Anwendung von Hitze so versiegelt wird, dass, wenn das Unterblatt an der Außenfläche des unteren Wandteils der kreisförmigen umlaufenden Wand versiegelt wird, man eine glatte, flache Oberfläche erhält.

13. Verfahren zur Herstellung eines formstabilen Pads nach Anspruch 12, **dadurch gekennzeichnet, dass** das Verfahren ferner den Schritt umfasst, in dem mindestens eine kreisförmige Rille mit einem Aufnahmevolumen, das gleich dem Volumen der kreisförmigen Rippe, hervorstehend von der Außenfläche des unteren Wandteils der ringförmigen umlaufenden Wand, ist, bereitgestellt wird.

14. Verfahren zur Herstellung eines formstabilen Pads nach Anspruch 12, **dadurch gekennzeichnet, dass** das Verfahren den Schritt umfasst, in dem eine kreisförmige Rille an jeder Seite der kreisförmigen Rippe bereitgestellt wird, wobei das Gesamtaufnahmevolumen von beiden kreisförmigen Rillen gleich dem Volumen der kreisförmigen Rippe, hervorstehend von der Außenfläche des unteren Wandteils der kreisförmigen umlaufenden Wand, ist.

15. Verfahren zur Herstellung eines formstabilen Pads nach Anspruch 12, 13 oder 14, **dadurch gekennzeichnet, dass** in dem Schritt des Versiegelns des Unterblatts Hitze während eines solchen Zeitraums angewendet wird, dass das gesamte Material der kreisförmigen Rippe, hervorstehend von der Außenfläche der ringförmigen umlaufenden Wand, schmilzt.

16. Verfahren zur Herstellung eines formstabilen Pads nach einem der Ansprüche 12 bis 15, **dadurch gekennzeichnet, dass** das Verfahren ferner den Schritt umfasst, in dem während des Versiegelns Druck und/oder Ultraschall und/oder Hochfrequenz verwendet wird.

17. Vorgeformter Versteifungskörper (17) zur Verwendung in einem Verfahren nach einem der Ansprüche 12-16, wobei der vorgeformte Versteifungskörper eine Oberseite und eine Unterseite hat, wobei die Oberseite einen offenen Oberseitenbereich hat, die Unterseite einen offenen Unterseitenbereich hat, der Versteifungskörper ferner umfassend eine ringförmige umlaufende Wand, verlaufend zwischen der Oberseite und der Unterseite mit darin einer aufteilenden Wandkonfiguration, die eine Gitterstruktur hat, die für Flüssigkeit von der Oberseite zu der Unterseite durchlässig ist, wobei die ringförmige umlaufende Wand einen gebogenen Querschnitt und einen im Wesentlichen parallel zu der Oberfläche verlaufenden unteren Wandteil hat, wobei der untere Wandteil eine kreisförmige hervorstehende Rippe (28) hat, die von der Außenfläche des unteren Wandteils der ringförmigen umlaufenden Wand hervorsteht, **dadurch gekennzeichnet, dass** der vorgeformte Versteifungskörper mindestens eine kreisförmige Rille (29, 30), angrenzend an die kreisförmige hervorstehende Rippe, hat.

18. Vorgeformter Versteifungskörper nach Anspruch 17, **dadurch gekennzeichnet, dass** die mindestens eine kreisförmige Rille ein Aufnahmevolumen hat, das gleich dem Volumen der kreisförmigen Rippe, hervorstehend von der Außenfläche des unteren Wandteils der ringförmigen umlaufenden Wand, ist.

19. Vorgeformter Versteifungskörper nach Anspruch 17, **dadurch gekennzeichnet, dass** der vorgeformte Versteifungskörper eine kreisförmige Rille auf jeder Seite der kreisförmigen Rippe umfasst, wobei das Gesamtaufnahmevolumen von beiden kreisförmigen Rillen gleich dem Volumen der kreisförmigen Rippe, hervorstehend von der Außenfläche des unteren Wandteils der ringförmigen umlaufenden Wand, ist.

20. Vorgeformter Versteifungskörper nach Anspruch 17, 18 oder 19, **dadurch gekennzeichnet, dass** die kreisförmige Rippe ungefähr 0,3 mm von der Außenfläche des unteren Wandteils der ringförmigen umlaufenden Wand hervorsteht.

21. Verfahren zur Zubereitung eines für den Konsum geeigneten Getränks unter Verwendung eines formstabilen Pads nach einem der Ansprüche 1-10 oder einer Anordnung nach Anspruch 11, in welchem Verfahren ein erstes formstabiles Pad mit einer Menge einer ersten Substanz, aufgenommen in die Gitterstruktur des Versteifungskörpers und umgeben von der Wandkonfiguration und dem Oberblatt und Unterblatt der ersten Abdeckung des ersten formstabilen Pads, bereitgestellt wird, wobei das Unterblatt und die Außenfläche des unteren Wandteils der ringförmigen umlaufenden Wand, zu der es versiegelt ist, eine glatte, flache Oberfläche bilden, sodass der Padhalter das erste Pad auf eine positive mechanisch eingreifende Weise aufnimmt, sodass es keine Lücke zwischen dem formstabilen Pad und der glatten, aufnehmenden Wand des Padhalters gibt, in welchem Verfahren dann eine Flüssigkeit, wie etwa heißes Wasser, dem Padhalter zugeführt wird, insbesondere von einer Oberseite von diesem und bevorzugt unter Druck, und es ihr ermöglicht wird, von dem Oberblatt der ersten Abdeckung durch die Substanz zu dem und durch den offenen Unterseitenbereich der Unterseite des Versteifungskörpers und durch das Unterblatt des ersten Pads zu fließen, wonach das so erhaltene Getränk durch mindestens eine Auslassöffnung in einer Unterseite des Halters abgezapft wird, und in welchem Verfahren ein Rückfluss des Getränks von dem offenen Unterseitenbereich der Unterseite des Versteifungskörpers und von dem Unterblatt zur Außenseite der ringförmigen umlaufenden Wand des Versteifungskörpers und des Padhalters durch das positive mechanische Eingreifen der glatten, flachen Oberfläche und dem Padhalter verhindert wird.

22. Verfahren zur Zubereitung eines für den Konsum geeigneten Getränks unter Verwendung eines formstabilen Pads nach Anspruch 21, in welchem Verfahren ein zweites formstabiles Pad bereitgestellt wird, mit einer Menge einer zweiten Substanz, die von der ersten Substanz verschieden ist, aufgenommen in die Gitterstruktur des Versteifungskörpers und umgeben von der Wandkonfiguration und dem Oberblatt und Unterblatt der ersten Abdeckung des zweiten formstabilen Pads, wobei das Unterblatt und die Außenfläche des unteren Wandteils der ringförmigen umlaufenden Wand, zu der es versiegelt ist, eine glatte, flache Oberfläche bilden, das Verfahren umfassend das Platzieren des zweiten formstabilen Pads in den Padhalter, sodass der Padhalter das zweite Pad auf eine positive mechanisch eingreifende Weise aufnimmt, sodass keine Lücke zwischen dem zweiten formstabilen Pad und der glatten aufnehmenden Wand des Padhalters ist, in welchem Verfahren dann eine Flüssigkeit, wie etwa heißes Wasser, dem Padhalter zugeführt wird, insbesondere von einer Oberseite davon und bevorzugt unter Druck, und es ihr ermöglicht wird, von dem Oberblatt der ersten Abdeckung durch die zweite Substanz zu dem und durch den offenen Unterseitenbereich der Unterseite des Versteifungskörpers und durch das Unterblatt des zweiten Pads zu fließen, wonach das zweite, auf diese Weise erhaltene Getränk, über mindestens eine Auslassöffnung in einer Unterseite des Halters abgezapft wird, und in welchem Verfahren ein Rückfluss des zweiten Getränks von dem offenen Unterseitenbereich der Unterseite des Versteifungskörpers und von dem Unterblatt zu der Außenseite der ringförmigen umlaufenden Wand des Versteifungskörpers und des Padhalters durch das positive mechanische Eingreifen der glatten, flachen Oberfläche und des Padhalters verhindert wird, und in welchem Verfahren das Getränk und das zweite Getränk kombiniert werden.

23. Verfahren zur Zubereitung eines für den Konsum geeigneten Getränks unter Verwendung eines formstabilen Pads nach Anspruch 22, in welchem Verfahren das zweite Getränk zuerst zubereitet wird und das aus dem ersten formstabilen Pad zubereitete Getränk danach zubereitet wird.

24. Verfahren zur Zubereitung eines für den Konsum geeigneten Getränks unter Verwendung eines formstabilen Pads nach Anspruch 22, in welchem Verfahren das Getränk zuerst zubereitet wird und das zweite Getränk, zubereitet aus dem zweiten formstabilen Pad, danach zubereitet wird.

25. Verfahren zur Zubereitung eines für den Konsum geeigneten Getränks unter Verwendung eines formstabilen Pads nach Anspruch 22-24, wobei die erste Substanz in dem ersten formstabilen Pad Instantkaffee ist und die zweite Substanz in dem zweiten formstabilen Pad Instantmilchpulver/- milchaufschäumer ist.

26. Kit von Teilen, umfassend eine Packung, eine erste Vielzahl erster formstabiler Pads nach einem der Ansprüche 1-10, jeweils umfassend eine erste Substanz, und eine zweite Vielzahl von Pads, die Packung enthaltend die ersten formstabilen Pads und die zweite Vielzahl von Pads.

27. Kit von Teilen nach Anspruch 26, wobei die erste Substanz in dem ersten formstabilen Pad Instantmilchpulver/-milchaufschäumer ist und die zweite Substanz in dem zweiten Pad gerösteter und gemahlener Kaffee ist.

28. Kit von Teilen nach Anspruch 26, wobei mindestens ein Teil der zweiten Vielzahl von Pads von zweiten formstabilen Pads nach einem der Ansprüche 1-10 gebildet wird, jeweils umfassend eine zweite Substanz, die von der ersten Substanz verschieden ist.

29. Kit von Teilen nach Anspruch 28, wobei die erste Substanz in dem ersten formstabilen Pad Instantkaffee ist und die zweite Substanz in dem zweiten formstabilen Pad Instantmilchpulver/-milchaufschäumer ist.

## Revendications

1. Dosette à mémoire de forme (3) pour préparer une boisson propre à la consommation, prévue avec :
au moins un premier revêtement (13) dans lequel une substance (14) qui est soluble dans un liquide est incluse, dans laquelle ledit au moins premier revêtement comprend une feuille de dessus (15) fabriquée à partir d'un matériau ne permettant pas le passage de la substance soluble, et une feuille de dessous (16) fabriquée à partir d'un matériau ne permettant pas le passage de la substance soluble, mais permettant le passage de la substance dissoute dans un liquide, dans laquelle la feuille de dessus et la feuille de dessous s'étendent au moins partiellement sensiblement parallèlement entre elles et à une surface (18),
un corps de renforcement (17) qui est placé entre la feuille de dessus et la feuille de dessous, dans laquelle le corps de renforcement a un côté supérieur (21) adjacent à la feuille de dessus et un côté inférieur (23) adjacent à la feuille de dessous, ledit côté supérieur ayant une zone de côté supérieur ouverte (20), ledit côté inférieur ayant une zone inférieure ouverte (22), ledit corps de renforcement comprenant en outre une paroi circonférentielle annulaire (91) s'étendant entre le côté supérieur et le côté inférieur et une configuration de paroi de compartimentage à l'intérieur de ce dernier, laquelle configuration de paroi de compartimentage a une structure de grille qui permet le passage du liquide du côté supérieur au côté inférieur, dans laquelle structure de grille, au moins une partie de la substance soluble est logée et chaque compartiment (19.1, 19.2, 19.3) formé par la configuration de paroi est entouré par cette configuration de paroi, la feuille de dessus et la feuille de dessous, ladite paroi circonférentielle annulaire ayant une section transversale incurvée et une partie de paroi inférieure (98) s'étendant au moins sensiblement parallèlement à la surface, ladite partie de paroi inférieure ayant un bord circulaire définissant la zone inférieure ouverte,
**caractérisée en ce que** ladite feuille de dessous est scellée à la surface externe de la partie de paroi inférieure (98) de la paroi circonférentielle annulaire, et ladite feuille de dessous et la surface externe de la partie de paroi inférieure de la paroi circonférentielle annulaire (91) à laquelle elle est scellée, forme une surface lisse, plate.

2. Dosette à mémoire de forme selon la revendication 1, **caractérisée en ce que** la feuille de dessous est scellée sur le côté externe de la partie de paroi inférieure de la paroi circonférentielle annulaire au moyen d'un joint d'étanchéité circulaire.

3. Dosette à mémoire de forme selon la revendication 1 ou 2, **caractérisée en ce que** la feuille de dessous est également fixée à un côté inférieur de la configuration de paroi.

4. Dosette à mémoire de forme selon l'une quelconque des revendications précédentes, **caractérisée en ce que** la feuille de dessous et la feuille de dessus sont interconnectées et sont de préférence interconnectées au niveau de leurs bords longitudinaux (24, 25) et sont encore de préférence interconnectées directement, dans laquelle les parties interconnectées forment un joint.

5. Dosette à mémoire de forme selon l'une quelconque des revendications précédentes, **caractérisée en ce que** le corps de renforcement est fabriqué à partir de polypropylène.

6. Dosette à mémoire de forme selon l'une quelconque des revendications précédentes, **caractérisée en ce qu'**une partie centrale du côté inférieur du corps de renforcement est prévue avec une partie de renflement s'étendant au-delà de la surface externe de la partie de paroi inférieure de la paroi circonférentielle annulaire.

7. Dosette à mémoire de forme selon la revendication 6, **caractérisée en ce que** la partie de renflement a une surface s'étendant parallèlement à la surface mentionnée ci-dessus.

8. Dosette à mémoire de forme selon la revendication 7, **caractérisée en ce que** la surface forme une partie centrale de la configuration de paroi de compartimentage.

9. Dosette à mémoire de forme selon l'une quelconque des revendications précédentes, dans laquelle la substance soluble comprend un ou plusieurs éléments du groupe comprenant le café instantané, le thé instantané, un ingrédient chocolaté, le lait en poudre instantané / crème, la chicorée, les épices, facultativement en combinaison avec du café torréfié et moulu, du thé, du sucre ou des arômes.

10. Dosette à mémoire de forme selon la revendication 9, dans laquelle la substance soluble est une combinaison de café instantané, de lait en poudre instantané / crème et d'un ingrédient chocolaté.

11. Ensemble d'une machine de préparation de boisson (1) comprenant un support de dosette (2) et une dosette à mémoire de forme (3) selon l'une quelconque des revendications 1 à 10 pour préparer une boisson propre à la consommation, prévu avec :
au moins un premier revêtement (13), dans lequel une substance (14) qui est soluble dans un liquide est incluse, dans lequel ledit au moins premier revêtement comprend une feuille de dessus (15) fabriquée à partir d'un matériau ne permettant pas le passage de la substance soluble, et une feuille de dessous (16) fabriquée à partir d'un matériau ne permettant pas le passage de la substance soluble, mais permettant le passage de la substance dissoute dans un liquide, dans lequel la feuille de dessus et la feuille de dessous s'étendent au moins partiellement sensiblement parallèlement entre elles à et à une surface (18),
un corps de renforcement (17) qui est placé entre la feuille de dessus et la feuille de dessous, dans lequel le corps de renforcement a un côté supérieur (21) adjacent à la feuille de dessus et un côté inférieur (23) adjacent à la feuille de dessous, ledit côté supérieur ayant une zone de côté supérieur ouverte (20), ledit côté inférieur ayant une zone inférieure ouverte (22), ledit corps de renforcement comprenant en outre une paroi circonférentielle annulaire (91) s'étendant entre le côté supérieur et le côté inférieur et une configuration de paroi de compartimentage à l'intérieur de ce dernier, laquelle configuration de paroi de compartimentage a une structure de grille qui permet le passage du liquide, du côté supérieur au côté inférieur, dans laquelle structure de grille, au moins une partie de la substance soluble est logée et chaque compartiment (19.1, 19.2, 19.3) formé par la configuration de paroi est entouré par cette configuration de paroi, la feuille de dessus et la feuille de dessous, ladite paroi circonférentielle annulaire ayant une section transversale incurvée et une partie de paroi inférieure (90) s'étendant au moins sensiblement parallèlement à la surface, ladite partie de paroi inférieure ayant un bord circulaire définissant la zone inférieure ouverte,
**caractérisé en ce que** ladite feuille de dessous est scellée à la surface externe de la partie de paroi inférieure (98) de la paroi circonférentielle annulaire et celle de la dosette à mémoire de forme, la feuille de dessous et la surface externe de la partie de paroi inférieure de la paroi circonférentielle annulaire à laquelle elle est scellée forment une surface lisse, plate, et **en ce que** le support de dosette comprend une paroi de réception lisse conçue pour recevoir la dosette à mémoire de forme par mise en prise mécanique positive de sorte que lorsque la dosette à mémoire de forme est reçue par le support de dosette, il n'y a pas d'espace entre la dosette à mémoire de forme et la paroi de réception lisse du support de dosette.

12. Procédé pour fabriquer une dosette à mémoire de forme selon l'une quelconque des revendications 1 à 10, dans lequel procédé, on utilise un corps de renforcement de préforme (17), ledit corps de renforcement de préforme ayant un côté supérieur et un côté inférieur, ledit côté supérieur ayant une zone de côté supérieur ouverte, ledit côté inférieur ayant une zone inférieure ouverte, ledit corps de renforcement comprenant en outre une paroi circonférentielle annulaire s'étendant entre le côté supérieur et le côté inférieur et une configuration de paroi de compartimentage à l'intérieur de ce dernier, laquelle configuration de paroi de compartimentage a une structure de grille qui permet le passage du liquide du côté supérieur au côté inférieur, ladite paroi circonférentielle annulaire ayant une section transversale incurvée et une partie de paroi inférieure s'étendant au moins sensiblement parallèlement à la surface, ladite partie de paroi inférieure ayant un bord circulaire définissant la zone inférieure ouverte, ladite partie de paroi inférieure ayant une nervure en saillie circulaire (28) faisant saillie à partir de la surface externe de la partie de paroi inférieure de la paroi circonférentielle annulaire, **caractérisé en ce que** ledit procédé comprend l'étape consistant à prévoir ladite partie de paroi inférieure avec au moins une rainure circulaire (29, 30) adjacente à ladite nervure en saillie circulaire, l'étape consistant à sceller la feuille de dessous à la nervure en saillie circulaire en appliquant de la chaleur, de sorte que lorsque ladite feuille de dessous est scellée sur la surface externe de la partie de paroi inférieure de la paroi circonférentielle annulaire, on obtient une surface lisse, plate.

13. Procédé pour fabriquer une dosette à mémoire de forme selon la revendication 12, **caractérisé en ce que** le procédé comprend en outre l'étape consistant à prévoir ladite au moins une rainure circulaire avec un volume de réception qui est égal au volume de la nervure circulaire faisant saillie à partir de la surface externe de la partie de paroi inférieure de la paroi circonférentielle annulaire.

14. Procédé pour fabriquer une dosette à mémoire de forme selon la revendication 12, **caractérisé en ce que** le procédé comprend l'étape consistant à prévoir une rainure circulaire de chaque côté de la nervure circulaire, le volume de réception total des deux rainures circulaires étant égal au volume de la nervure circulaire faisant saillie à partir de la surface externe de la partie de paroi inférieure de la paroi circonférentielle annulaire.

15. Procédé pour fabriquer une dosette à mémoire de forme selon la revendication 12, 13 ou 14, **caractérisé en ce que**, à l'étape consistant à sceller la feuille de dessous, on applique de la chaleur pendant une période de temps telle que le matériau de la nervure circulaire faisant saillie à partir de la surface externe de la partie de paroi inférieure de la paroi circonférentielle annulaire fond.

16. Procédé pour fabriquer une dosette à mémoire de forme selon l'une quelconque des revendications 12 à 15, **caractérisé en ce que** le procédé comprend en outre l'étape consistant à utiliser de la pression et/ou des ultrasons et/ou la haute fréquence pendant le scellement.

17. Corps de renforcement de préforme (17) destiné à être utilisé dans un procédé selon l'une quelconque des revendications 12 à 16, ledit corps de renforcement de préforme ayant un côté supérieur et un côté inférieur, ledit côté supérieur ayant une zone de côté supérieur ouverte, ledit côté inférieur ayant une zone inférieure ouverte, ledit corps de renforcement comprenant en outre une paroi circonférentielle annulaire s'étendant entre le côté supérieur et le côté inférieur et une configuration de paroi de compartimentage à l'intérieur de ce dernier, laquelle configuration de compartimentage a une structure de grille qui permet le passage du liquide du côté supérieur au côté inférieur, ladite paroi circonférentielle annulaire ayant une section transversale incurvée et une partie de paroi inférieure s'étendant au moins sensiblement parallèlement à la surface, ladite partie de paroi inférieure ayant un bord circulaire définissant la zone inférieure ouverte, ladite partie de paroi inférieure ayant une nervure en saillie circulaire (20) faisant saillie à partir de la surface externe de la partie de paroi inférieure de la paroi circonférentielle annulaire, **caractérisé en ce que** ledit corps de renforcement de préforme comprend au moins une rainure circulaire (29, 30) adjacente à ladite nervure en saillie circulaire.

18. Corps de renforcement de préforme selon la revendication 17, **caractérisé en ce que** ladite au moins une rainure circulaire a un volume de réception qui est égal au volume de la nervure circulaire faisant saillie à partir de la surface externe de la partie de paroi inférieure de la paroi circonférentielle annulaire.

19. Corps de renforcement de préforme selon la revendication 17, **caractérisé en ce que** ledit corps de renforcement de préforme comprend une rainure circulaire de chaque côté de la nervure circulaire, le volume de réception total des deux rainures circulaires étant égal au volume de la nervure circulaire faisant saillie à partir de la surface externe de la partie de paroi inférieure de la paroi circonférentielle annulaire.

20. Corps de renforcement de préforme selon la revendication 17, 18 ou 19, **caractérisé en ce que** la nervure circulaire fait saillie d'environ 0,3 mm de la surface externe de la partie de paroi inférieure de la paroi circonférentielle annulaire.

21. Procédé pour préparer une boisson propre à la consommation en utilisant une dosette à mémoire de forme selon l'une quelconque des revendications 1 à 10 ou un ensemble selon la revendication 11, dans lequel procédé, une première dosette à mémoire de forme est prévue en ayant une quantité d'une première substance logée dans la structure de grille du corps de renforcement et entourée par la configuration de paroi et la feuille de dessus et la feuille de dessous du premier revêtement de la première dosette à mémoire de forme, ladite feuille de dessous et la surface externe de la partie de paroi inférieure de la paroi circonférentielle annulaire à laquelle elle est scellée formant une surface lisse, plate, ledit procédé comprend l'étape consistant à placer la première dosette à mémoire de forme dans un support de dosette de sorte que le support de dosette reçoit la première dosette en mise en prise mécanique positive, de sorte qu'aucun espace n'est présent entre la dosette à mémoire de forme et la paroi de réception lisse du support de dosette, dans lequel procédé, ensuite un liquide, tel que de l'eau chaude, est amené au support de dosette, en particulier à partir de son côté supérieur et de préférence sous pression, et est autorisé à s'écouler de la feuille de dessus du premier revêtement en passant par la substance vers et à travers la zone inférieure ouverte du côté inférieur du corps de renforcement et en passant par le feuille de dessous de la première dosette, après quoi, la boisson obtenue de cette manière est évacuée via au moins une ouverture de sortie dans un côté inférieur du support, et dans lequel procédé, le refoulement de la boisson de la zone inférieure ouverte du côté inférieur du corps de renforcement et de la feuille de dessous au côté externe de la paroi circonférentielle annulaire du corps de renforcement et du support de dosette est empêché par ladite mise en prise mécanique positive de ladite surface lisse, plate et le support de dosette.

22. Procédé pour préparer une boisson propre à la consommation en utilisant une dosette à mémoire de forme selon la revendication 21, dans lequel procédé, on prévoit une seconde dosette à mémoire de forme ayant une quantité d'une seconde substance, différente de la première substance, logée dans la structure de grille du corps de renforcement et entourée par la configuration de paroi et la feuille de dessus et la feuille de dessous du premier revêtement de la seconde dosette à mémoire de forme, ladite feuille de dessous et la surface externe de la partie de paroi inférieure de la paroi circonférentielle annulaire à laquelle elle est scellée formant une surface lisse, plate, ledit procédé comprend l'étape consistant à placer ladite seconde dosette à mémoire de forme dans le support de dosette de sorte que le support de dosette reçoit la seconde dosette par mise en prise mécanique positive, de sorte qu'il n'y a aucun espace entre la seconde dosette à mémoire de forme et la paroi de réception lisse du support de dosette, dans lequel procédé, ensuite un liquide, tel que de l'eau chaude, est amené au support de dosette, en particulier à partir de son côté supérieur et de préférence sous pression, et est autorisé à s'écouler à partir de la feuille de dessus du premier revêtement en passant par la seconde substance vers et à travers la zone inférieure ouverte du côté inférieur du corps de renforcement et en passant par la feuille de dessous de la seconde dosette, après quoi, la seconde boisson obtenue de cette manière est évacuée via au moins une ouverture de sortie dans un côté inférieur du support, et dans lequel procédé, le refoulement de la seconde boisson de la zone inférieure ouverte du côté inférieur du corps de renforcement et de la feuille de dessous au côté externe de la paroi circonférentielle annulaire du corps de renforcement et du support de dosette est empêché par ladite mise en prise mécanique positive de ladite surface lisse, plate et le support de dosette, et dans lequel procédé, la boisson et la seconde boisson sont mélangées.

23. Procédé pour préparer une boisson propre à la consommation en utilisant une dosette à mémoire de forme selon la revendication 22, dans lequel procédé la seconde boisson est préparée en premier et la boisson préparée à partir de la première dosette à mémoire de forme est préparée par la suite.

24. Procédé pour préparer une boisson propre à la consommation en utilisant une dosette à mémoire de forme selon la revendication 22, dans lequel procédé, la boisson est préparée en premier et la seconde boisson préparée à partir de la seconde dosette à mémoire de forme est préparée par la suite.

25. Procédé pour préparer une boisson propre à la consommation en utilisant une dosette à mémoire de forme selon les revendications 22 à 24, dans lequel la première substance dans la première dosette à mémoire de forme est du café instantané et la seconde substance dans la seconde dosette à mémoire de forme est du lait en poudre instantané / crème.

26. Kit de pièces comprenant un emballage, une première pluralité de premières dosettes à mémoire de forme selon l'une quelconque des revendications 1 à 10, comprenant chacune une première substance, et une seconde pluralité de dosettes, ledit emballage contenant ladite première des dosettes à mémoire de forme et ladite seconde pluralité de dosettes.

27. Kit de pièces selon la revendication 26, dans lequel la première substance dans la première dosette à mémoire de forme est du lait en poudre instantané / crème et la seconde substance dans la seconde dosette est du café torréfié et moulu.

28. Kit de pièces selon la revendication 26, dans lequel au moins une partie de la seconde pluralité de dosettes est formée par les secondes dosettes à mémoire de forme selon l'une quelconque des revendications 1 à 10, chacune comprenant une seconde substance qui est différente de la première substance.

29. Kit de pièces selon la revendication 28, dans lequel la première substance dans la première dosette à mémoire de forme est du café instantané et la seconde substance dans la seconde dosette à mémoire de forme est du lait en poudre instantané / crème.
